# EUROPÄISCHE PATENTANMELDUNG

(11) **EP 1 312 908 A1**
(43) Veröffentlichungstag der Anmeldung: **21.05.2003**
(21) Anmeldenummer: 02023575.0
(22) Anmeldetag: 23.10.2002
(51) Int. Cl.: G01L 9/06

(54) **Elektrische Schaltungsanordnung**

(30) Priorität: 20.11.2001 DE 10156951
(71) Anmelder: WABCO GmbH & CO. OHG, 30453 Hannover (DE)
(72) Erfinder: Güldenpfennig, Uwe, 90556 Seukendorf (DE)
(74) Vertreter: Günther, Constantin

(57) **Zusammenfassung**

Die Erfindung betrifft eine elektrische Schaltungsanordnung mit wenigstens zwei elektrischen Bauteilen (2, 3, 4, 7, 20, 21, 22, 23, 24), die an wenigstens zwei Schaltungspunkten (13, 14, 16, 17, 18, 19) miteinander galvanisch zu verbinden sind, sowie mit äußeren Anschlußpunkten (30, 31, 32, 33, 34, 35, 36, 37) zur elektrischen Verbindung vorbestimmter Schaltungspunkte (13, 14, 16, 17) der Schaltungsanordnung mit einer externen elektrischen Baugruppe (6). Hiervon ausgehend wird eine elektrische Schaltungsanordnung, insbesondere für Drucksensoren, angegeben, die mit geringem Aufwand herzustellen und zu prüfen ist. Hierfür ist wenigstens ein Teil der miteinander galvanisch zu verbindenden Schaltungspunkte (16, 17, 18, 19) mit äußeren Anschlußpunkten (30, 31, 32, 33, 34, 35, 36, 37) galvanisch verbunden. Wenigstens ein Teil der notwendigen Verbindungen zwischen diesen Schaltungspunkten (16, 17, 18, 19) erfolgt durch Verbindung von äußeren Anschlußpunkten (30, 31, 32, 33, 34, 35, 36, 37) miteinander. Des weiteren wird ein geeignetes Herstellungsverfahren hierfür angegeben.

## Beschreibung

Die Erfindung betrifft eine elektrische Schaltungsanordnung, insbesondere eine Meßbrücke mit Abgleichschaltung in einem Drucksensor, gemäß dem Oberbegriff des Patentanspruchs 1.

Gattungsgemäße Schaltungsanordnungen sind beispielsweise aus der EP 0 803 054 B1 oder der DE 197 01 055 A1 bekannt.

Die bekannten Schaltungsanordnungen werden vorzugsweise in Drucksensoren eingesetzt. Hierfür ist ein Teil der Schaltungsanordnung als piezoresistiver Druckwandler ausgebildet, der aus in eine Siliziumfläche implantierten Widerständen besteht, welche als Wheatstone-Brücke angeordnet sind. Die Siliziumfläche ist unter Einwirkung eines Drucks verformbar, was zu einer Veränderung der Widerstandswerte der Wheatstone-Brücke führt und als Drucksignal elektrisch ausgewertet werden kann.

Derartige Drucksensoren sind sehr empfindlich gegenüber Temperatureinflüssen und anderen äußeren Einflüssen. In diesem Zusammenhang ist durch die zuvor genannten Schaltungsanordnungen bekannt, zusätzlich zu den Widerständen der Wheatstone-Brücke als Abgleichschaltung Kompensationswiderstände vorzusehen, die zum Teil parallel, zum Teil in Reihe mit einzelnen Widerständen oder Teilen der Wheatstone-Brücke geschaltet sind. Durch geeignete Abstimmung der Kompensationswiderstände kann eine weitestgehende Kompensation der unerwünschten Einflüsse erzielt werden. Somit kann ein Abgleich des Drucksensors auf einen erwünschten Kennlinienverlauf durchgeführt werden.

In der Praxis hat sich gezeigt, daß bei einer Fertigung von Drucksensoren nach dem zuvor beschriebenen Prinzip, nämlich mit einem Widerstandsnetzwerk aus der Wheatstone-Brücke und den Kompensationswiderständen, nach dem Fertigungsprozeß ein Abgleich der Kompensationswiderstände bei jedem einzelnen Drucksensor erforderlich ist. Dies führt insbesondere bei der Massenherstellung von derartigen Drucksensoren zu einem erheblichen Herstell- und Prüfaufwand. Um diesem Aufwand gering zu halten, ist es bisher üblich, die sich durch die Parallel- und Reihenschaltung der Widerstände ergebenden Schleifen des Widerstandsnetzwerks, welche die Prüfung der elektrischen Werte, z.B. den Widerstandverlauf über die Temperatur, eines einzelnen Widerstands erschweren, an vorgegebenen Stellen aufzutrennen, so daß sich für die Prüfung ein schleifenfreies Netzwerk ergibt. An diesem schleifenfreien Netzwerk wird dann eine automatisierte Prüfung der Widerstandswerte und gegebenenfalls ein Abgleich der Kompensationswiderstände durchgeführt. Hiernach erfolgt eine Verbindung der zuvor aufgetrennten Stellen innerhalb des Widerstandsnetzwerks durch Lötungen. Diese Methode führt zu relativ hohen Fertigungskosten infolge der zusätzlich erforderlichen Lötstellen.

Eine andere Methode zur Prüfung und zum Abgleich der Drucksensoren ohne das Auftrennen des Widerstandsnetzwerks ist das Verfahren des sogenannten Guardings. Bei diesem Verfahren wird eine Abkopplung von bei der Prüfung störenden Widerstandsschleifen auf elektronischem Wege durch eine hochgenaue Stromeinspeisung an definierten Meßpunkten durchgeführt. Im Verlauf der Prüfung eines Widerstands muß dabei die Stromstärke der Stromeinspeisung permanent überprüft und nachgeregelt werden. Diese Methode ist relativ störanfällig, erfordert einen hohen apparativen Aufwand und führt nicht zu der erwünschten Güte beim Abgleich des Drucksensors.

Der Erfindung liegt daher die Aufgabe zugrunde, eine elektrische Schaltungsanordnung, insbesondere für Drucksensoren, anzugeben, die mit geringem Aufwand herzustellen und zu prüfen ist und ein geeignetes Herstellungsverfahren hierfür anzugeben.

Diese Aufgabe wird durch die in den Patentansprüchen 1, 11 und 14 angegebenen Ausgestaltungen der Erfindung gelöst. Vorteilhafte Weiterbildungen der Erfindung sind in den Unteransprüchen angegeben.

Die Erfindung hat den Vorteil, mit den ohnehin bei der Schaltungsanordnung vorgesehenen Elementen, wie z. B. Bondpads als äußere Anschlußpunkte, auszukommen. Die Erfindung vermeidet damit den Einsatz zusätzlicher Technologiearten bei der Herstellung der Schaltungsanordnung, was zu günstigen Herstell- und Prüfkosten führt. Zusätzliche Herstellungsschritte wie Auftrennen von Leitungen und späteres Wiederverbinden, z. B. durch Lötungen, werden vermieden. Hierdurch kann bei Drucksensoren außerdem die Ausfallrate gesenkt und somit die Zuverlässigkeit und auch die Meßgenauigkeit der Drucksensoren weiter gesteigert werden. Die Herstellung von Drucksensoren wird vereinfacht und kostengünstiger gestaltet.

Gemäß einer vorteilhaften Weiterbildung der Erfindung gehört wenigstens ein Teil der miteinander galvanisch zu verbindenden Schaltungspunkte zu den vorbestimmten Schaltungspunkten. Da für letztere ohnehin äußere Anschlußpunkte, vorzugsweise in Form von Bondpads, vorzusehen sind, kann hierdurch der Bedarf an zusätzlichen äußeren Anschlußpunkten gering gehalten werden, und die ohnehin vorhandenen äußeren Anschlußpunkte können zweifach genutzt werden.

Die erfindungsgemäßen Herstellverfahren gemäß den Patentansprüchen 11 und 14 weisen ebenfalls den Vorteil auf, daß neben den ohnehin üblichen und erforderlichen Verbindungstechnologien, z.B. Löten als erste elektrische Verbindungstechnologie und Bonden als zweite elektrische Verbindungstechnologie, keine weitere elektrische Verbindungstechnologie erforderlich wird. Die bereits oben im Zusammenhang mit der Schaltungsanordnung genannten Vorteile der Erfindung werden, verkürzt gesagt, durch das Verlagern der Herstellung bestimmter elektrischer Verbindungen von der ersten elektrischen Verbindungstechnologie in die zweite elektrische Verbindungstechnologie erreicht.

Insbesondere bei Anwendung der Bondtechnik als eine der elektrischen Verbindungstechnologien wird in der Ausgestaltung des Herstellverfahrens gemäß Patentanspruch 14 ein sehr effizienter und zeitsparender Herstellprozeß einer elektrischen Baueinheit, z.B. bestehend aus der erwähnten Schaltungsanordnung und einer externen elektrischen Baugruppe, erzielt, indem die bisher unterschiedlichen Arbeitsschritte des Herstellens interner Verbindungen der Schaltungsanordnung einerseits und des Herstellens von Verbindungen der Schaltungsanordnung zu der externen elektrischen Baugruppe andererseits zu einem einzigen Arbeitsschritt integrierbar sind.

Unter Nennung weiterer Vorteile wird die Erfindung nachfolgend anhand eines Ausführungsbeispiels unter Verwendung von Zeichnungen näher erläutert.

Es zeigen
- Fig. 1: den prinzipiellen mechanischen Aufbau der Schaltungsanordnung in schematischer Darstellung und
- Fig. 2: eine bevorzugte Ausführungsform der Schaltungsanordnung als elektrisches Schaltbild und
- Fig. 3: die Schaltungsanordnung gemäß Fig. 2 mit erfindungsgemäßen Erweiterungen.

In den Figuren werden gleiche Bezugszeichen für einander entsprechende Teile verwendet.

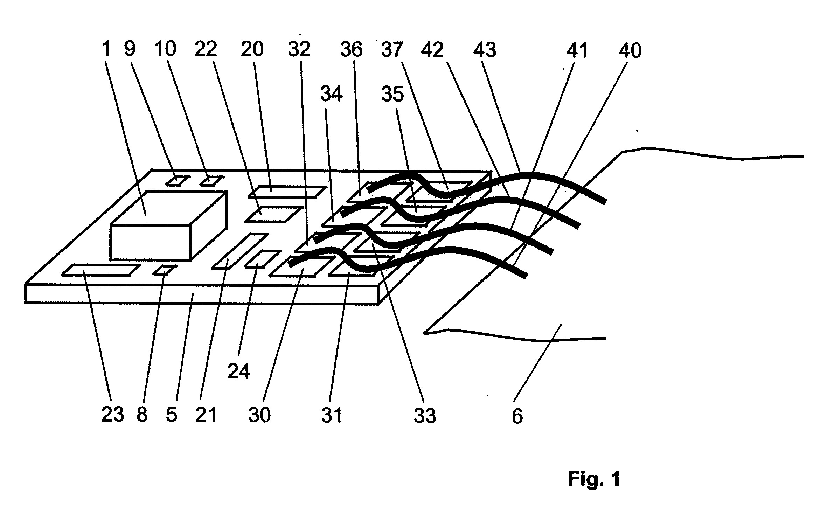

Das nachfolgende Ausführungsbeispiel beschreibt einen insbesondere für den Einsatz in Kraftfahrzeugen vorgesehenen Drucksensor, der aus einer in der Fig. 1 dargestellten Schaltungsanordnung sowie einem nicht dargestellten, die Schaltungsanordnung umgebenden Gehäuse besteht. Die Schaltungsanordnung weist eine Trägerplatte (5) auf, die z. B. als elektrische Leiterplatte bzw. Platine ausgebildet ist. Auf der Trägerplatte (5) sind als elektrische Bauteile eine Druckmeßzelle (1), Kompensationswiderstände (20, 21, 22, 23, 24), Meßanschlüsse (8, 9, 10) und äußere Anschlüsse (30, 31, 32, 33, 34, 35, 36, 37) angeordnet. Die vorgenannten, auf der Trägerplatte (5) angeordneten Elemente sind in der nachfolgend noch beschriebenen Weise miteinander elektrisch verbunden.

Die Druckmeßzelle (1) weist vorzugsweise den aus der EP 0 677 726 A2 bekannten mechanischen Aufbau mit der erwähnten Siliziumfläche und der Wheatstone-Brücke auf. Die Kompensationswiderstände (20, 21, 22, 23, 24) dienen zur Kompensation unerwünschter Temperatur-Einflüsse auf die Druckmeßzelle (1) und zur Einstellung einer gewünschten Kennlinie des Drucksensors. Sie werden vorzugsweise durch Siebdruck hergestellt. Die Meßanschlüsse (8, 9, 10) dienen zum Anschluß von Prüfgeräten bei der Prüfung des Drucksensors im Rahmen der Herstellung.

Zur Verbindung der Schaltungsanordnung mit einer externen elektrischen Baugruppe (6), etwa einer Auswertelektronik für das Drucksensor-Signal, sind die äußeren Anschlußpunkte (30, 31, 32, 33, 34, 35, 36, 37), welche vorzugsweise als Bondpads ausgeführt sind, vorgesehen, die in erfindungsgemäßer Weise zusätzlich zur Herstellung wenigstens eines Teils der für die gewünschte Funktion der Schaltungsanordnung notwendigen Verbindungen innerhalb der Schaltungsanordnung dienen. Zur Herstellung dieser Verbindungen sind Verbindungsdrähte (40, 41, 42, 43) vorgesehen, die vorzugsweise als Dickdrahtbondverbindung oder auch als Dünndrahtbondverbindung ausgebildet sein können. Die Verbindungsdrähte (40, 41, 42, 43) verbinden jeweils zwei der Anschlußpunkte (30, 31, 32, 33, 34, 35, 36, 37) untereinander und zusätzlich diese beiden miteinander verbundenen Anschlußpunkte wiederum mit einem hierfür vorgesehenen Anschluß der externen elektrischen Baugruppe (6). So verbindet beispielsweise der Verbindungsdraht (40) die Anschlußpunkte (30, 31) miteinander und stellt zudem eine Verbindung zu der Baugruppe (6) her.

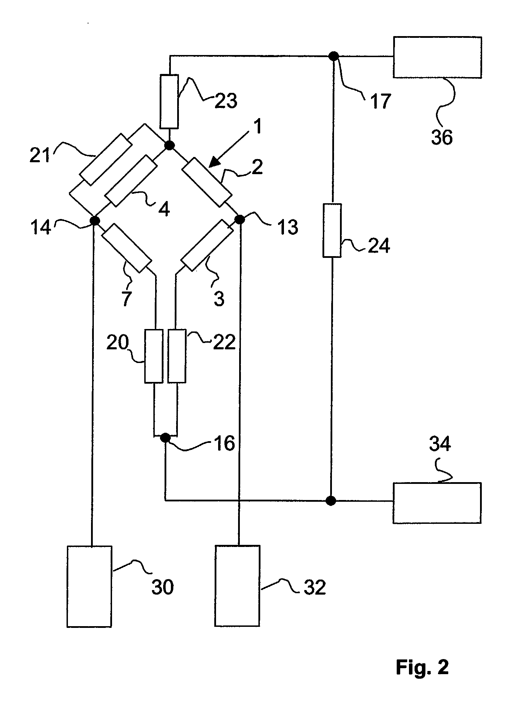

Die Fig. 2 zeigt eine bevorzugte Ausführungsform der Schaltungsanordnung als elektrisches Schaltbild. Die Druckmeßzelle (1) enthält durch Implantation in eine Siliziumschicht hergestellte elektrische Widerstände (2, 3, 4, 7), die als Wheatstone-Brücke angeordnet sind. Die Widerstände (2, 3, 4, 7) und die Kompensationswiderstände (20, 21, 22, 23, 24) sind in der in der Fig. 2 dargestellten Weise elektrisch, d.h. galvanisch, miteinander verbunden, beispielsweise an den Schaltungspunkten (13, 14, 16, 17). Die vorgenannten Bauteile der Schaltungsanordnung sind an vorbestimmten Schaltungspunkten (13, 14, 16, 17) über äußere Anschlußpunkte (30, 32, 34, 36), welche zum Betrieb des Drucksensors dienen, mit der externen elektrischen Baugruppe (6) verbindbar.

Die Wheatstone-Brücke gibt ein Ausgangssignal ab, das einerseits von der Druckbeaufschlagung abhängig ist, andererseits auch von der vorliegenden Temperatur abhängig ist. Der Kompensationswiderstand (21) dient dabei zur Kompensation der Temperaturabhängigkeit des Ausgangssignalwerts der Wheatstone-Brücke an der unteren Grenze des Druckmeßbereichs, d.h. im allgemeinen beim Druckwert Null (Offsetsignal). Der Kompensationswiderstand (24) dient zur Kompensation der Temperaturabhängigkeit des Ausgangssignalwerts an der oberen Grenze des Druckmeßbereichs, wobei vorzugsweise der Ausgangssignalwert an der oberen Grenze des Druckmeßbereichs vermindert um das Offsetsignal kompensiert wird. Diese Differenz der Ausgangssignalwerte an der oberen und der unteren Grenze des Druckmeßbereichs wird auch als Spannensignal bezeichnet. Der Kompensationswiderstand (23) dient, gemeinsam mit dem Kompensationswiderstand (24), zur Einstellung bzw. Anpassung des Signalbereichs des Drucksensors an einen gewünschten Bereich. Die Kompensationswiderstände (20, 22) dienen zur Einstellung bzw. Anpassung einer Nullagen-Verschiebung des Ausgangssignals des Drucksensors.

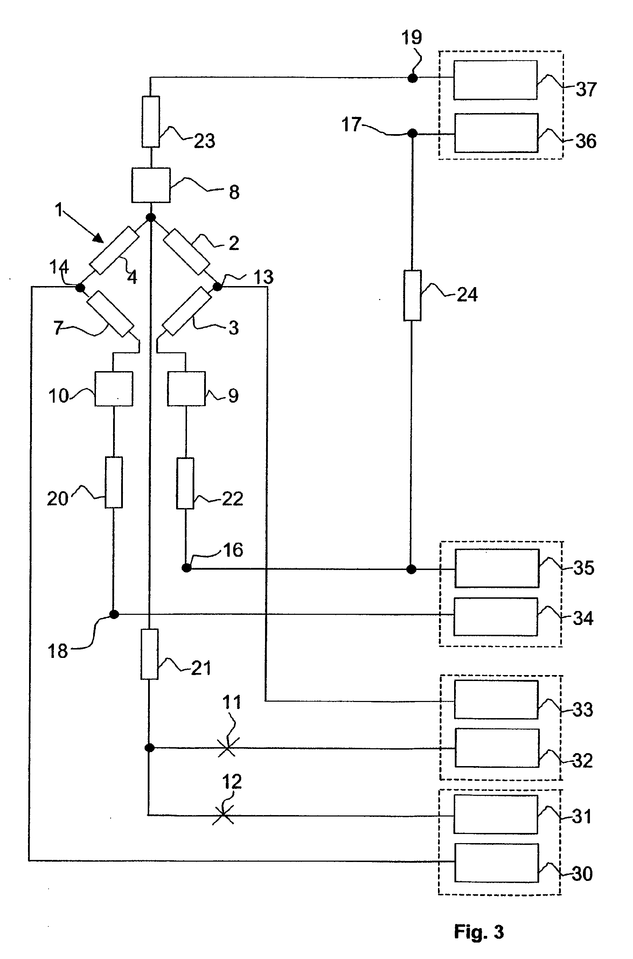

In der Fig. 3 ist die Schaltungsanordnung gemäß Fig. 2 mit den erfindungsgemäßen Erweiterungen dargestellt, nämlich im vorliegenden Ausführungsbeispiel mit den Meßanschlüssen (8, 9, 10), den zusätzlichen äußeren Anschlußpunkten (31, 33, 35, 37) sowie mit Trennstellen (11, 12). Des weiteren ist der in der Fig. 2 dargestellte Schaltungspunkt (17) hier in die Schaltungspunkte (17, 19) aufgetrennt. Der Schaltungspunkt (16) gemäß Fig. 2 ist in der Fig. 3 in die Schaltungspunkte (16, 18) aufgetrennt. Hierdurch wird das gesamte Netzwerk schleifenfrei, was eine getrennte und von anderen Bauteilen unbeeinflußte Prüfung jedes einzelnen Bauteils ermöglicht.

Im Gegensatz zu den eingangs erwähnten Schaltungsanordnungen für Drucksensoren kann die zuvor beschriebene, erfindungsgemäße Schaltungsanordnung auf vereinfachte Weise mit den folgenden Schritten hergestellt und geprüft werden:
1. Herstellung der elektrischen Schaltungsanordnung derart, daß wenigstens die für die Prüfung der elektrischen Parameter der Schaltungsanordnung notwendigen elektrischen Verbindungen zu äußeren Anschlußpunkten (30, 31, 32, 33, 34, 35, 36, 37) hergestellt werden. Die Schaltungsanordnung liegt dann wie in Fig. 3 dargestellt vor. Die Werte sämtlicher Widerstände, d. h. sowohl der Widerstände (2, 3, 4, 7) der Wheatstone-Brücke als auch die Kompensationswiderstände (20, 21, 22, 23, 24), können über die Meßanschlüsse (8, 9, 10) und die äußeren Anschlüsse (30, 31, 32, 33, 34, 35, 36, 37) separat kontaktiert werden. Unerwünschte Beeinflussungen der Widerstände untereinander sind nicht vorhanden, da das Netzwerk in diesem Zustand noch schleifenfrei ist. So kann z. B. durch Kontaktierung des Meßpunkts (9) und des äußeren Anschlußpunkts (33) der Widerstand (3) geprüft werden.
2. Prüfung der elektrischen Parameter der Schaltungsanordnung unter Verwendung der äußeren Anschlußpunkte (30, 31, 32, 33, 34, 35, 36, 37) und der Meßpunkte (8, 9, 10) und gegebenenfalls Abgleich der Schaltungsanordnung. Hierbei wird z. B. eine Prüfanordnung an die Meßpunkte (8, 9, 10) und die in diesem Schritt als Meßpunkte verwendeten Anschlußpunkte (30, 33) angeschlossen. Bei der Prüfung wird das Ausgangssignal der Wheatstone-Brücke bei bestimmten Temperatur- und Druckwerten gemessen und hieraus eine Ausgangssignal-/Temperaturkennlinie ermittelt. Der Abgleich der Schaltungsanordnung erfolgt durch Anpassung der Widerstandswerte der Kompensationswiderstände (20, 21, 22, 23, 24). Diese Widerstände sind, wie bereits erwähnt, mittels Siebdruckverfahren auf die Trägerplatte (5) aufgebracht. Die Anpassung der Widerstandswerte erfolgt während des Prüf- und Abgleichschritts vorzugsweise durch Entfernen eines Teils der gedruckten Widerstandsschicht mittels eines Abgleichlasers.
3. Nach Prüfung und Abgleich der Schaltungsanordnung erfolgt die Herstellung von für die beabsichtigte Funktion der Schaltungsanordnung noch fehlenden elektrischen Verbindungen zwischen Bauteilen innerhalb der Schaltungsanordnung, insbesondere der miteinander galvanisch zu verbindenden Schaltungspunkte (16, 17, 18, 19), durch Verbindung von äußeren Anschlußpunkten (30, 31, 32, 33, 34, 35, 36, 37) miteinander. Hierfür werden Bonddrähte als Verbindungsdrähte (40, 41, 42, 43) an jeweils zwei äußeren Anschlußpunkten, z. B. den Anschlußpunkten (30, 31) im Falle des Verbindungsdrahts (40), befestigt und zu der externen elektrischen Baugruppe (6) geführt, wie aus der Fig. 1 ersichtlich, und dort mittels Bonden befestigt. Ein Bonddraht wird somit an drei Punkten bzw. Bondpads befestigt. Hierdurch entsteht eine aus der Schaltungsanordnung und der externen elektrischen Baugruppe bestehenden elektrische Baueinheit.

In dem in der Fig. 3 gezeigten Ausführungsbeispiel ist hiernach der Kompensationswiderstand (21) über die Anschlußpunkte (32, 33) mit dem Schaltungspunkt (13) einerseits und über die Anschlußpunkte (30, 31) mit dem Schaltungspunkt (14) andererseits verbunden. Es liegen somit zwei Verbindungen vor. Diese Art der Ausführung der Schaltungsanordnung hat den Vorteil, daß im Verlauf der Prüfung und des Abgleichs entschieden werden kann, mit welchem der Schaltungspunkte (13, 14) der Kompensationswiderstand (21) endgültig verbunden werden soll. Im einen Fall ist der Kompensationswiderstand (21) dann parallel zu dem Widerstand (2) schaltbar, in dem anderen Fall parallel zu dem Widerstand (4). Die Zuordnung erfolgt nach Prüfung und Abgleich im letzten Herstellschritt durch Auftrennen einer der Trennstellen (11, 12). Die Auftrennung kann z. B. mittels eines Laserschnitts durchgeführt werden.

## Patentansprüche

1. Elektrische Schaltungsanordnung mit wenigstens zwei elektrischen Bauteilen (2, 3, 4, 7, 20, 21, 22, 23, 24), die durch Verbinden wenigstens zweier Schaltungspunkte (13, 14, 16, 17, 18, 19) miteinander galvanisch zu verbinden sind, sowie mit äußeren Anschlußpunkten (30, 31, 32, 33, 34, 35, 36, 37) zur elektrischen Verbindung vorbestimmter Schaltungspunkte (13, 14, 16, 17) der Schaltungsanordnung mit einer externen elektrischen Baugruppe (6), **dadurch gekennzeichnet, daß** wenigstens ein Teil der miteinander galvanisch zu verbindenden Schaltungspunkte (16, 17, 18, 19) mit äußeren Anschlußpunkten (30, 31, 32, 33, 34, 35, 36, 37) galvanisch verbunden ist.

2. Schaltungsanordnung nach Anspruch 1, **dadurch gekennzeichnet, daß** wenigstens ein Teil der miteinander galvanisch zu verbindenden Schaltungspunkte (16, 17, 18, 19) zu den vorbestimmten Schaltungspunkten (13, 14, 16, 17) gehört.

3. Schaltungsanordnung nach einem der vorhergehenden Ansprüche, **dadurch gekennzeichnet, daß** die erste (2, 3, 4, 7) und/oder die zweite (20, 21, 22, 23, 24) Bauteilanordnung Bestandteil eines Widerstandsnetzwerks, insbesondere einer Wheatstone-Brücke, sind.

4. Schaltungsanordnung nach einem der vorhergehenden Ansprüche, **dadurch gekennzeichnet, daß** die erste (2, 3, 4, 7) und/oder die zweite (20, 21, 22, 23, 24) Bauteilanordnung Bestandteile eines Widerstandsnetzwerks zum Abgleich der Schaltungsanordnung sind.

5. Schaltungsanordnung nach einem der vorhergehenden Ansprüche, **gekennzeichnet durch** die Anwendung als Bestandteil eines Drucksensors, insbesondere eines nach dem piezoresistiven Prinzip arbeitenden Drucksensors.

6. Schaltungsanordnung nach Anspruch 5, **dadurch gekennzeichnet, daß** der den Druck erfassende Teil des Drucksensors als einen Siliziumchip enthaltende Druckmeßzelle (1) ausgebildet ist.

7. Schaltungsanordnung nach einem der vorhergehenden Ansprüche, **dadurch gekennzeichnet, daß** nach Herstellung und Prüfung der Schaltungsanordnung ein Teil (11, 12) der galvanischen Verbindungen innerhalb der Schaltungsanordnung auftrennbar ist.

8. Schaltungsanordnung nach einem der vorhergehenden Ansprüche, **dadurch gekennzeichnet, daß** die äußeren Anschlußpunkte (30, 31, 32, 33, 34, 35, 36, 37) als Bondpads ausgebildet sind.

9. Schaltungsanordnung nach Anspruch 8, **dadurch gekennzeichnet, daß** für die Verbindung der äußeren Anschlußpunkte (30, 31, 32, 33, 34, 35, 36, 37) miteinander eine Bondverbindung, insbesondere eine Dickdraht- oder Dünndraht-Bondverbindung, verwendet wird.

10. Schaltungsanordnung nach Anspruch 9, **dadurch gekennzeichnet, daß** eine Verbindung von äußeren Anschlußpunkten (30, 31, 32, 33, 34, 35, 36, 37) miteinander und zu der externen elektrischen Baugruppe (6) in einem Arbeitsgang mittels derselben Bondverbindung herstellbar ist.

11. Verfahren zur Herstellung einer elektrischen Schaltungsanordnung, **gekennzeichnet durch** folgende Schritte:
a) Herstellung der elektrischen Schaltungsanordnung derart, daß zunächst nur ein Teil der für die beabsichtigte Funktion der Schaltungsanordnung notwendigen elektrischen Verbindungen zwischen Bauteilen innerhalb der Schaltungsanordnung unter Anwendung einer ersten elektrischen Verbindungstechnologie hergestellt wird,
b) Herstellung der für die beabsichtigte Funktion der Schaltungsanordnung noch fehlenden elektrischen Verbindungen zwischen Bauteilen innerhalb der Schaltungsanordnung sowie Herstellung von Verbindungen von äußeren Anschlußpunkten (30, 31, 32, 33, 34, 35, 36, 37) der Schaltungsanordnung zu einer externen elektrischen Baugruppe (6), wobei in beiden Fällen eine zweite elektrische Verbindungstechnologie angewandt wird, welche sich von der ersten elektrischen Verbindungstechnologie unterscheidet.

12. Verfahren nach Anspruch 11, **gekennzeichnet durch** folgenden Schritt:
- Prüfung der elektrischen Parameter der Schaltungsanordnung oder Teilen davon und gegebenenfalls Abgleich vor der Herstellung der für die beabsichtigte Funktion der Schaltungsanordnung noch fehlenden elektrischen Verbindungen.

13. Verfahren nach Anspruch 11 oder 12, **dadurch gekennzeichnet, daß** wenigstens ein Teil der für die beabsichtigte Funktion der Schaltungsanordnung noch fehlenden elektrischen Verbindungen zwischen Bauteilen innerhalb der Schaltungsanordnung durch Verbindung von äußeren Anschlußpunkten (30, 31, 32, 33, 34, 35, 36, 37) miteinander erfolgt.

14. Verfahren zur Herstellung einer elektrischen Baueinheit unter Anwendung der Bondtechnik, wobei ein erster und ein zweiter Anschlußpunkt der elektrischen Baueinheit mittels eines Bonddrahts miteinander verbunden werden, **dadurch gekennzeichnet, daß** derselbe Bonddraht ununterbrochen an einen dritten oder weiteren Anschlußpunkt der elektrischen Baueinheit geführt und daran befestigt wird.
